# EUROPEAN PATENT APPLICATION

(11) **EP 3 306 522 A1**
(43) Date of publication of application: **11.04.2018**
(21) Application number: 16465543.3
(22) Date of filing: 06.10.2016
(51) Int. Cl.: G06K 9/00, G06K 9/03, B60S 1/08

(54) **DEVICE FOR DETERMINING A REGION OF INTEREST ON AND/OR WITHIN A VEHICLE WINDSCREEN**

(71) Applicant: Continental Automotive GmbH, 30165 Hannover (DE)
(72) Inventor: Onica, Lavinia, 307220 Giroc (RO); Stanciu, Ion Rares, 307395 Sag (RO)
(74) Representative: Reuter, Andreas

(57) **Abstract**

The present invention relates to a device (10) for determining a region of interest on and/or within a vehicle windscreen. It is described to provide (210) a processing unit (30) with at least one image, the at least one image relating to a scene external to a vehicle viewed through a windscreen of the vehicle. The processing unit determines (220) that a region of interest exists within the windscreen, the determination comprising detection of an out of focus region within the at least one image. An output unit (40) outputs (230) information representative of the region of interest.

## Description

### FIELD OF THE INVENTION

The present invention relates to a device for determining a region of interest on and/or within a vehicle windscreen, to a system for determining a region of interest on and/or within a vehicle windscreen, to a method for determining a region of interest on and/or within a vehicle windscreen, as well as to a computer program element.

### BACKGROUND OF THE INVENTION

The general background of this invention is the field of driving systems that determine if a windscreen of a vehicle is cracked or dirty.

US8274562 describes a camera for identifying soiling on a protective screen. The camera is focused on a scene behind the protective screen and can be used to identify soiling and for other applications, e.g. to identify driving lanes and/or to identify objects. Soiling is identified by evaluating frames recorded in succession. It is described that a prerequisite for a successful measurement is that the relative speed of the camera and of at least one recorded object in the surroundings is not equal to zero and its trajectory is predicted in the depiction. By comparing the relevant frame sections, possible soiling on subregions of the protective screen is identified.

There is a need to provided a technique for determining cracks and dirt on a vehicles windscreen that is not predicated on a speed of travel of the vehicle.

### SUMMARY OF THE INVENTION

It would be advantageous to have improved apparatus for determining driving warning information.

The object of the present invention is solved with the subject matter of the independent claims, wherein further embodiments are incorporated in the dependent claims. It should be noted that the following described aspects and examples of the invention apply also for the device for determining a region of interest on and/or within a vehicle windscreen, the system for determining a region of interest on and/or within a vehicle windscreen, the method for determining a region of interest on and/or within a vehicle windscreen, and for the computer program element.

According to a first aspect, there is provided a device for determining a region of interest on and/or within a vehicle windscreen, comprising:
- an input unit;
- a processing unit; and
- an output unit.

The input unit is configured to provide the processing unit with at least one image, the at least one image relating to a scene external to a vehicle viewed through a windscreen of the vehicle. The processing unit is configured to determine that a region of interest exists within the windscreen, the determination comprising detection of an out of focus region within the at least one image. The output unit is configured to output information representative of the region of interest.

In other words, a crack or dirty part of a windscreen can be detected on the basis of one or more "blurry" or out-of-focus areas in an image acquired through a windscreen of a vehicle. Thus normal in car cameras, which generally focus at infinity and do not focus on the windscreen, can be utilised in order to detect cracks and dirty areas on windscreens by detecting blurry areas in acquired imagery, where images coming from the camera are being used..

To put this another way, the device detects and signalizes a crack windscreen/windshield for a vehicle, that is located in a camera's field of view. Thus already existing vehicle cameras can be utilized, that are collecting imagery outside of the car, to detect cracked and dirty windscreens.

In this way, a notification can be given that the windscreen should be cleaned and/or remedial action should be taken due to the windscreen being cracked or potentially cracked.

In the following discussion within a windscreen also means on a windscreen, and thus can relate to a crack that has structure on the surface of the windscreen and within the glass itself, but can also relate to dirt that is on the surface of the windscreen.

In an example, the at least one image was acquired by at least one camera that was not focussed on the windscreen of the vehicle.

Thus in this manner, standard vehicle cameras that are viewing scenes external to the vehicle as part of navigation and/or safety systems, or as part of automatic driving systems can also be utilised to determine if a vehicle's windscreen is cracked and/or is dirty.

In an example, the at least one image comprises a first image and a second image. The determination that a region of interest exists within the windscreen comprises detection of an out of focus region within the first image and detection of an out of focus region in the second image.

In other words, it can be determined that a crack or dirty area exists in a windscreen if more than one image has a blurry region. This means that a leaf landing on the windscreen and blowing away or a fly landing and flying off does not lead to the determination that there is a crack or dirty area. In this manner, a degree of confidence that there is a crack or dirty area on the windscreen can be provided.

Thus a dirt region (assuming the windshield is not cleaned between the time of acquisition of the first image and the second image) or crack, stays in the same position in the image (just the background image changes), and this can be used in helping to determine that there is a crack or dirt region.

In an example, the determination that a region of interest exists within the windscreen comprises a determination that a first position on the windscreen correlating with a position of the out of focus region in the first image is substantially the same as a second position on the windscreen correlating with a position of the out of focus region in the second image.

In other words, the first image and second image need not be acquired by the same camera. A first camera could have a field of view where a crack causes a blurry area in the top right of the image and a second camera could have a field of view where the same crack causes a blurry area in the top left of the image. However, each image from each camera can have spatial areas that correlate with spatial areas of the windscreen, and in this way it can be determined that the same region of interest in the windscreen is causing the blurring. Also, in this way the effect of a rain drop causing blurring in images, but with the position of the blurring moving as the drop runs down the windscreen does not lead to a notification that the windscreen is cracked for example.

In an example, the determination that a region of interest exists within the windscreen comprises a determination that the position of the out of focus region in the first image is substantially the same as the position of the out of focus region in the second image.

Thus in this manner, the same camera could be used to provide the first image and the second image.

In an example, the processing unit is configured to determine that the region of interest within the windscreen relates to a crack on the basis of at least one difference between the out of focus region in the first image and the out of focus region in the second image.

In other words, a crack can be detected taking into account that light scatters within a crack leading to a specific structure within the blur region. As a car moves forward, and/or performs turning manoeuvres the direction of light entering the windscreen changes slightly and this leads to changes in the way light scatters within the crack within the blur (out of focus region). Detection of this change within an out of focus region enables the processing unit to determine that the region of interest within the windscreen is a crack rather than is a region of dirt, and/or enables the processing unit to determine that there is a crack with a degree of confidence.

In an example, the device comprises a database, the database containing at least one image data associated with at least one crack in a screen.

In other words, knowledge of how cracks cause blurring of images can be used to aid in the determination that there is a crack. Image processing can be used to compare reference imagery with different types of cracks to the imagery being acquired in order to determine with better confidence whether there is a crack, and indeed what type of crack the windscreen has. Crack types that propagate more quickly than other crack types can then be notified more robustly to the driver of the vehicle, indicating that remedial action is immediately required and if necessary that the car should not be driven further.

In a second aspect, there is provided a system for determining a region of interest on and/or within a vehicle windscreen, comprising:
- at least one camera; and
- a device for determining a region of interest on and/or within a vehicle windscreen according to the first aspect.

The at least one camera is configured to be located within a vehicle and the at least one camera is configured to acquire the at least one image relating to a scene external to the vehicle viewed through the windscreen of the vehicle.

In this manner, a camera based system is provided for a car, that can make use of existing cameras or use bespoke cameras that are looking at scenes outside of the car with the cameras focussed on infinity, and the system enables the detection of cracks and areas of dirt on the windscreen.

In a third aspect, there is provided a method for determining a region of interest on a vehicle windscreen, comprising:
a) providing a processing unit with at least one image, the at least one image relating to a scene external to a vehicle viewed through a windscreen of the vehicle;
b) determining with the processing unit that a region of interest exists within the windscreen, the determination comprising detection of an out of focus region within the at least one image; and
c) outputting with an output unit output information representative of the region of interest.

In an example, the at least one image comprises a first image and a second image, and wherein step b) comprises detecting an out of focus region within the first image and detecting an out of focus region in the second image.

In an example, step b) comprises determining that a first position on the windscreen correlating with a position of the out of focus region in the first image is substantially the same as a second position on the windscreen correlating with a position of the out of focus region in the second image.

In an example, step b) comprises determining that the position of the out of focus region in the first image is substantially the same as the position of the out of focus region in the second image.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for determining a region of interest on and/or within a vehicle windscreen;
Fig. 2 shows a schematic set up of an example of a system for determining a region of interest on and/or within a vehicle windscreen;
Fig. 3 shows a method for determining a region of interest on and/or within a vehicle windscreen;
Fig. 4 shows schematic representations of examples of types of cracks; and
Fig. 5 shows examples of edges of interest that can be analysed in order to determine an image's blurriness.

### DETAILED DESCRIPTION OF EMBODIMENTS

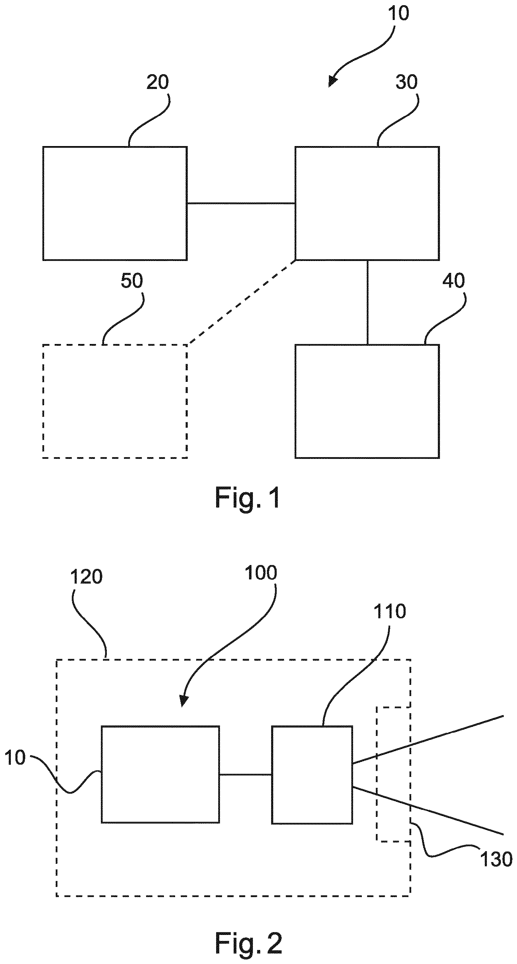

Fig. 1 shows an example of a device 10 for determining a region of interest on and/or within a vehicle windscreen. The device 10 comprises an input unit 20, a processing unit 30, and an output unit 40. The input unit 20 is configured to provide the processing unit 30 with at least one image, via wireless or wired communication. The at least one image relates to a scene external to a vehicle viewed through a windscreen of the vehicle. The processing unit 30 is configured to determine that a region of interest exists within the windscreen, the determination comprising detection of an out of focus region within the at least one image. The output unit 40 is configured to output information representative of the region of interest.

In an example, detection of an out of focus region comprises utilisation of a Haar wavelet transform. In an example, the Haar wavelet transform is utilised to detect blurry pixel blocks in an image. In an example, detection of an out of focus region comprises a determination of a measure of local gradients and/or a measure of the sharpness of features in different spatial areas of the image. In an example, detection of an out of focus region comprises utilisation of an edge detection algorithm. In an example, detection of an out of focus region comprises utilisation of a point spread function applied over different spatial areas of the image. In an example, detection of an out of focus region comprises utilisation of a Fourier transform or Fast Fourier transform applied over different spatial areas of the image. In an example, detection of an out of focus region comprises utilisation of a Gaussian Laplace filter over different spatial areas of the image. In other words, as the image has been acquired by a camera that is not focussed on the windscreen but is configured to view the scene outside of the vehicle, the outside scene will be characterised by features that are in focus and as such have sharp edges, strong gradients etc. However, a region of the image where the windshield/windscreen is cracked or dirty will suffer to a certain extent "blur" or be out of focus, and will be characterised by edges that are not as sharp as to be found in other image areas and gradients that are not as strong as in other image areas. The processing unit then uses image processing algorithms to analyses areas of the image, at an appropriate spatial scale, to determine if that area is in focus or is out of focus. This determination can be self contained, in that the determination can be made on the basis of the analysis of that region, or the determination can be made taking into account the analysis in other image areas. Thus, not only can a absolute measure of "blur" be made to determine if there is a crack or dirty area in a region of the windscreen, but a relative measure can be made on the basis of how blurry this region is in relation to other regions.

In an example, the processing unit is configured to determine if the region of interest within the windscreen relates to a crack or dirt on the basis of structure within the out of focus (blurry) region. Light is scattered as it goes through a crack leading to structure within the blurry region, and detection of this structure can be used to indicate if the blurry region relates to a crack or to an area of dirt on the windshield.

In the following discussion within a windscreen also means on a windscreen, and thus can relate to a crack that has structure on the surface of the windscreen and within the glass itself, but can also relate to dirt that is on the surface of the windscreen.

According to an example, the at least one image was acquired by at least one camera that was not focussed on the windscreen of the vehicle.

According to an example, the at least one image comprises a first image and a second image, and the determination that a region of interest exists within the windscreen comprises detection of an out of focus region within the first image and detection of an out of focus region in the second image.

In an example, a third, fourth, fifth, xth image can be analysed to determine if there is a blurry region, and in this way if the out of focus region (region of blur) is found in increasing numbers of images a confidence level that there is a crack or dirty area can be increased accordingly.

According to an example, the determination that a region of interest exists within the windscreen comprises a determination that a first position on the windscreen correlating with a position of the out of focus region in the first image is substantially the same as a second position on the windscreen correlating with a position of the out of focus region in the second image.

In an example, a plurality of cameras can be utilised to have different fields of view through a vehicles windscreen, thereby covering more area of the windscreen.

According to an example, the determination that a region of interest exists within the windscreen comprises a determination that the position of the out of focus region in the first image is substantially the same as the position of the out of focus region in the second image.

According to an example, the processing unit 30 is configured to determine that the region of interest within the windscreen relates to a crack on the basis of at least one difference between the out of focus region in the first image and the out of focus region in the second image.

In an example, bright to dark and dark to bright transitions are recorded within regions in imagery to determine if there is a crack or dirt region. Since a crack in a windshield means breaking the old glass structure and forming a new one, broken glass planes form which reflect the light depending on its angle. Light angle changes cause some of the bright crack regions to become dark and some of the dark regions to become bright at the region of the crack. However, whether they are dark or bright, the windshield crack regions remain blurry. In an example, for each 16x16 pixel block of pixels being examined the number of brightness transitions is recorded. If the blurry region relates to dirt and not a crack, the image at the region of the dirt does not have regions with brightness transitions and this is how the algorithm can be used to distinguish between them. The algorithm can be used to detect windshield dirt as well, and thus detect a crack and detect a dirt region. In an example, a degree of confidence is calculated by determining a block that has the largest number of light/dark (or blur) transitions. A threshold level is set at half of this maximum number. The number of blurry blocks with transitions below this threshold, but non zero, is divided by a number of blocks with transitions to compute a degree of confidence, which can be expressed as a percentage.

In an example, the processing unit is configured to be provided with information relating to an orientation of the vehicle, such as provided by a GPS/inertial navigation/navigation system operating within the vehicle. In an example, the processing unit is configured to be provided with information relating to the direction of light from a light direction detector. In this way the processing unit can correlate changes in the blurry region with changes in orientation of the vehicle and/or direction of light, enabling a correlation to be made relating to changes in the direction of light entering the windscreen (directly with the direction of light or correlated with an orientation of the vehicle) with changes in the blurry region. This further enables the processing unit to determine whether the region of interest within the windscreen is a crack.

According to an example, the device comprises a database 50, the database containing at least one image data associated with at least one crack in a screen.

In an example, the at least one image data is representative of at least one view through the screen having the at least one crack in the screen.

Information on windscreen cracks can be found at http://www.carwindshields.info/car-windshield-stress-cracks, and http://www.carwindshields.info/windshield-crack-types.

In an example, the at least one crack is any one of: a star crack; a partial bullseye crack; a sun crack; a chip crack; a long crack.

Fig. 2 shows an example of a system 100 for determining a region of interest on and/or within a vehicle windscreen. The system 100 comprises at least one camera 110, and a device 10 for determining a region of interest on and/or within a vehicle windscreen described with respect to Fig. 1. The at least one camera is configured to be located within a vehicle 120. The at least one camera is configured to acquire the at least one image relating to a scene external to the vehicle viewed through the windscreen 130 of the vehicle.

In an example, the at least one camera 110 is the input unit 20.

In an example, the device 10 is located within the vehicle 120. However, image data could be sent from the camera to a device that is external to the vehicle, such as in a centralised vehicle depot, and imagery processed there can be used to indicate if the vehicle has a cracked or dirty windshield.

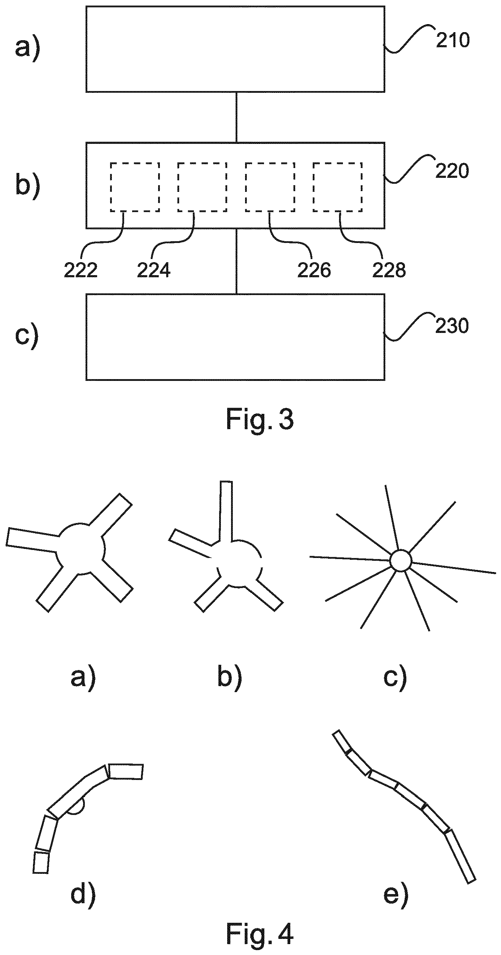

Fig. 3 shows a method 200 for determining a region of interest on a vehicle windscreen in its basic steps. The method 200 comprises:
in a providing step 210, also referred to a step a), providing a processing unit 30 with at least one image, the at least one image relating to a scene external to a vehicle viewed through a windscreen of the vehicle;
in a determining step 220, also referred to as step b), determining with the processing unit that a region of interest exists within the windscreen, the determination comprising detection of an out of focus region within the at least one image; and
in an outputting step 230, also referred to as step c), outputting with an output unit 40 output information representative of the region of interest.
In an example, the at least one image comprises a first image and a second image, and wherein step b) comprises detecting 222 an out of focus region within the first image and detecting 224 an out of focus region in the second image.

In an example, step b) comprises determining 226 that a first position on the windscreen correlating with a position of the out of focus region in the first image is substantially the same as a second position on the windscreen correlating with a position of the out of focus region in the second image.

In an example, step b) comprises determining 228 that the position of the out of focus region in the first image is substantially the same as the position of the out of focus region in the second image.

The device, system and method are now described in further detail with respect to Figs. 4-5.

Fig. 4 shows examples of types of cracks that can occur in windscreens/windshields. In an example, the crack is a stress crack. An already existent car camera is used to detect windshield cracks, and also detect dirt areas on the windshield. The camera is focused on infinity, and in respect is similar to, and indeed can be, and in car camera that forms part of the navigation, safety, automatic driving system that requires that the environment around the car be imaged. In the present device, method and system for detecting the crack in the windshield, or the area of dirt, imagery acquired by the camera is passed to a processor or processing unit, and an algorithm (image processing algorithm) is used to detect for example windshield cracks. The algorithm detects blurry persistent image areas, and distinguishes between a crack and other optical disturbances. Due to the fact that the cameras focus on infinity, cracks in the windshield situated in the field of view of the camera appear as a blurry region on an image acquired by the camera, with a blurry region in the image correlates with the position of the crack in the windshield at the position within the field of view. The acquired image has rows and columns of pixels governed by the size of the detector. As such various sizes of sensor can be used leading to different sizes of images in relation to the numbers of pixels, and the image need not be square in terms of the number of pixels in each dimension. The image is separated into blocks 16x16 pixels in extent, and thus the image is divided into a number of blocks. The algorithm works on the 16x16 pixel blocks. To detect the blurry region, the algorithm identifies blurry pixel areas. The next block is similarly analysed, and blurry pixel areas are added to the previous blurry pixel areas to form a "blurry" image, which if there is a localised crack in the windscreen will have a blurry region in the image. The blurred regions position and dimensions are checked, and if necessary the driver can be advised to clean the car's windshield or have a crack repaired on a windscreen replaced. Thus a stream of images (coming from the same camera, but that could be coming from different cameras) are used to detect blurry regions. A matrix (a vector of vectors) is used to store "data" about the 16x16pixels blocks. Here "Data" means: blurry block or not (a Boolean variable), the old value (the last iteration's value) of block blur (due to the image noise there may be a transition), the block brightness and the old value of brightness (used to detect a brightness transition) and two variables to count them. In the blurry region the algorithm searches for the horizontal line of blocks having the maximum number of blurry blocks. The algorithm looks to the number of blurry blocks, on the line that maximum occurs, on the start and stop positions of the burry line segment. All these are subjected to thresholding. If all these conditions are met, a counter is incremented. If one condition is not met, the counter is decremented. If the counter exceeds its threshold, a cracked windshield situation is declared.

Additionally, referring to the types of cracks shown in Fig. 4, the types of blurred regions that result from the different types of cracks are modelled, and a comparison between the acquired blurred region and the modeled data enables a determination to be made that the blurred region actually relates to a crack, and determination can be made of the type of crack. Thus, the driver can be informed that the windscreen is cracked, and if the crack type is determined to be of the type that can lead to a rapid deterioration of the windshield the driver can be appropriately warned to seek remedial action immediately. The algorithm also enables confidence levels, such as 50%, 75%, 95% of the probability of a region of dirt or of a crack being present in the windshield, and use this when relaying information to the driver. The algorithm need not work on a line by line basis, can process on an area by area basis, as would be appreciated by the skilled person. Furthermore, the image can be split up into blocks of different sizes to that described above, and analysed on a line by line basis or on an area by area basis in order to determine blurry regions.

### Image Analysis

A good way to indicate the blurriness degree is represented by the edges present in the image. Indeed, cases in which no edges may occur (examples include a dark night and / or a cloudless blue summer sky. Several types of edges are of interest in order to analyze an image's blurriness. These edges are:
the Dirac,
the Roof,
the Astep,
the Gstep

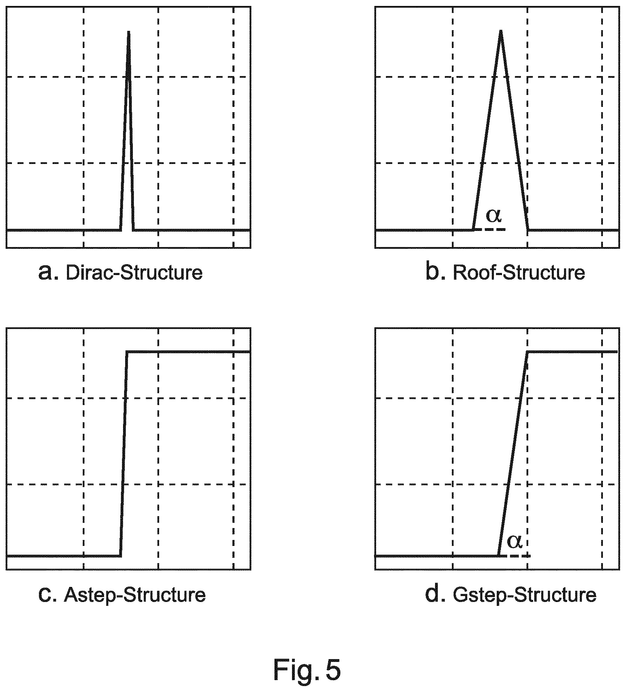

These edges can be seen in Fig. 5.

In case of an abrupt edge, high frequencies are involved. Therefore, a crystal-clear image will have edges of types Dirac and Astep. In case of limited frequencies, they become of types b) and d) - blurry. As such an image edge analysis is used to reveal information regarding the blurriness in an image.

Specifically, a Haar algorithm is used to establish the blurriness of the image. Performing a Haar wavelet transform will result in a pyramid like structure (Fig. 5). The decomposition level in this case is 3. The image is then dividend in NxN windows/tiles, each being a power of 2 (in fact this is the reason why the block's dimensions are 16x16). A block (which is often referred to as a tile) is considered if there is a change (an edge) in horizontal, vertical or diagonal directions. However, for each of them there is a threshold. For a specific block, if the change exceeds the threshold, the said block is considered to be an edge point. Changes exceeding a threshold are considered in all directions in order to compute one value for each image (the original one plus two pyramidal images). Several rules apply once these values are found. For every block labeled an edge point, if the computed value in the original image exceeds the value computed in the level 1 image and the level 1 image exceeds the level 2 image computed value, the block is a Dirac or Astep structure, otherwise it is a GStep or Roof edge. If the first level value is greater than the other two, the block is a Roof edge. The original image value is compared with the threshold for every Gstep or Roof-edge. If lower, the block is likely to be in a blurred image. Further details on the Haar wavelet transform can be found in the following paper: Tong, H., Li, M., Zhang, H., & Zhang, C. (2004, June), "Blur detection for digital images using wavelet transform", Multimedia and Expo, 2004, ICME'04, 2004 IEEE International Conference on (Vol. 1, pp. 17-20), IEEE.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining a region of interest on and/or within a vehicle windscreen, comprising:
- an input unit (20);
- a processing unit (30); and
- an output unit (40);
wherein, the input unit is configured to provide the processing unit with at least one image, the at least one image relating to a scene external to a vehicle viewed through a windscreen of the vehicle;
wherein, the processing unit is configured to determine that a region of interest exists within the windscreen, the determination comprising detection of an out of focus region within the at least one image; and
wherein, the output unit is configured to output information representative of the region of interest.

2. Device according to claim 1, wherein the at least one image was acquired by at least one camera that was not focussed on the windscreen of the vehicle.

3. Device according to any of claims 1-2, wherein the at least one image comprises a first image and a second image, and wherein the determination that a region of interest exists within the windscreen comprises detection of an out of focus region within the first image and detection of an out of focus region in the second image.

4. Device according to claim 3, wherein the determination that a region of interest exists within the windscreen comprises a determination that a first position on the windscreen correlating with a position of the out of focus region in the first image is substantially the same as a second position on the windscreen correlating with a position of the out of focus region in the second image.

5. Device according to claim 4, wherein the determination that a region of interest exists within the windscreen comprises a determination that the position of the out of focus region in the first image is substantially the same as the position of the out of focus region in the second image.

6. Device according to any of claims 3-5, wherein the processing unit (30) is configured to determine that the region of interest within the windscreen relates to a crack on the basis of at least one difference between the out of focus region in the first image and the out of focus region in the second image.

7. Device according to any of claims 1-6, wherein the device comprises a database (50), the database containing at least one image data associated with at least one crack in a screen.

8. A system (100) for determining a region of interest on and/or within a vehicle windscreen, comprising:
- at least one camera (110);
- a device (10) for determining a region of interest on and/or within a vehicle windscreen according to any of claims 1-7;
wherein, the at least one camera is configured to be located within a vehicle (120) and the at least one camera is configured to acquire the at least one image relating to a scene external to the vehicle viewed through the windscreen (130) of the vehicle.

9. A method (200) for determining a region of interest on a vehicle windscreen, comprising:
a) providing (210) a processing unit (30) with at least one image, the at least one image relating to a scene external to a vehicle viewed through a windscreen of the vehicle;
b) determining (220) with the processing unit that a region of interest exists within the windscreen, the determination comprising detection of an out of focus region within the at least one image; and
c) outputting (230) with an output unit (40) output information representative of the region of interest.

10. Method according to claim 9, wherein the at least one image comprises a first image and a second image, and wherein step b) comprises detecting (222) an out of focus region within the first image and detecting (224) an out of focus region in the second image.

11. Method according to claim 10, wherein step b) comprises determining (226) that a first position on the windscreen correlating with a position of the out of focus region in the first image is substantially the same as a second position on the windscreen correlating with a position of the out of focus region in the second image.

12. Method according to claim 11, wherein step b) comprises determining (228) that the position of the out of focus region in the first image is substantially the same as the position of the out of focus region in the second image.

13. A computer program element for controlling an apparatus according to any one of claims 1 to 7 and/or a system according to claim 8, which when executed by a processor is configured to carry out the method of any of claims 9-12.
